# EUROPEAN PATENT APPLICATION

(11) **EP 4 722 752 A1**
(43) Date of publication of application: **08.04.2026**
(21) Application number: 25204147.0
(22) Date of filing: 23.09.2025
(51) Int. Cl.: G01S 1/04, H04W 64/00, G01S 5/02, G01S 5/10

(54) **METHOD AND DEVICE FOR DENSIFYING A DOWNLINK TIME DIFFERENCE OF ARRIVAL NETWORK**

(30) Priority: 02.10.2024 US 202463702415 P
(71) Applicant: QORVO US, INC., Greensboro, NC 27409 (US)
(72) Inventor: Le Thierry d Ennequin, Christophe, Greensboro, 27409 (US); Vivier, Guillaume, Greensboro, 27409 (US)
(74) Representative: D Young & Co LLP

(57) **Abstract**

A method for an electronic device to join a downlink-time difference of arrival (DL-TDoA) network as an ad hoc anchor device is provided. The method includes, determining a location of the electronic device, and determining whether a condition to operate as the ad hoc anchor device in the DL-TDoA network is satisfied. The method also includes, in response to the condition being satisfied, transmitting a request message to operate as the ad hoc anchor device in the DL-TDoA network to a server device.

## Description

### FIELD OF THE DISCLOSURE

The present disclosure relates to ultra-wideband (UWB) enabled devices and systems for densifying a downlink-time difference of arrival (DL-TDoA or DT) network using UWB devices, in particular, to improve coverage by DT-anchors and thus localization by DT-tags (e.g., UWB devices).

### BACKGROUND

Time difference of arrival (TDoA) is a positioning methodology that determines the difference between the time-of-arrival (ToA) of radio signals. In the ultra-wideband (UWB) communication, downlink TDoA (DL-TDoA or DT) refers to a method of location estimation that involves a user device overhears messages sent by UWB anchors to estimate its self-location without being tracked by the UWB anchors.

The DL-TDoA scheme often includes infrastructure DL-TDoA (DT) elements (DT-anchors), and mobile devices (DT-tags). DT-anchors in the scheme are permanently installed on the walls or ceiling and periodically transmit the UWB signal as per rules defined in FiRa DL-TDoA protocol. Upon reception of those UWB signals, a DT-tag can perform a multilateration algorithm to localize itself.

However, the existing DL-TDoA has limitations. For example, to accurately determine the location of a DT-tag, a sufficient number of DT-anchors is needed. Thus, a method and a system for a DT-tag to improve its localization with a low number of existing DT-anchors are desired.

### SUMMARY

Particular aspects are set out in the appended independent claims. Various optional embodiments are set out in the dependent claims. Embodiments of the disclosure provide a method for an electronic device to join a downlink time difference of arrival (DL-TDoA) network as an ad hoc anchor device. The method includes, determining a location of the electronic device, and determining whether a condition to operate as the ad hoc anchor device in the DL-TDoA network is satisfied. The method also includes, in response to the condition being satisfied, transmitting a request message to operate as the ad hoc anchor device in the DL-TDoA network to a server device.

In some embodiments, the method further includes, receiving a confirmation message to operate as the ad hoc anchor device from the server device with session parameters; and operating as the ad hoc anchor according to the session parameters.

In some embodiments, the session parameters indicate the electronic device to operate as an initiator anchor device or a responder anchor device in the DL-TDoA network.

In some embodiments, the operating as the ad hoc anchor device includes, receiving a poll message, as the responder anchor device, from an initiator anchor device in the DL-TDoA network; and transmitting a timestamp to the initiator anchor device. The timestamp represents the precise time a message is transmitted by the ad hoc anchor device. In some embodiments, the ad hoc anchor device also transmits a current location with the timestamp, to the initiator anchor. In some embodiments, the location is transmitted via out-of-band (OOB) means.

In some embodiments, the operating as the ad hoc anchor device includes, transmitting a poll message, as the initiator anchor device, to a responder anchor device in the DL-TDoA network; and receiving a timestamp of the responder anchor device. The timestamp represents the precise time a message is transmitted by the responder anchor device. In some embodiments, the ad hoc anchor device also receives a current location of the responder anchor (e.g., the location when the responder transmits the timestamp). In some embodiments, the location is received via an OOB means.

In some embodiments, the timestamp is transmitted in a predetermined slot indicated by the session parameters.

In some embodiments, the method further includes transmitting the location or a medium access control (MAC) address to the server device through out-of-band (OOB) means.

In some embodiments, the method further includes transmitting a status of the ad hoc anchor device to the initiator anchor device.

In some embodiments, the determining of the location includes, receiving a set of TDoA data from one or more other anchor devices in the DL-TDoA network; and computing the location using a multilateration algorithm based on the set of TDoA data.

In some embodiments, the one or more other anchor devices include at least one non-ad hoc anchor device.

In some embodiments, the determining of the location includes, receiving a set of global positioning system (GPS) signals; and computing the location using the GPS signals.

In some embodiments, the method further includes, in response to the condition not being satisfied, terminating transmitting the request message to the server device.

In some embodiments, the method further includes receiving a reward from the server device.

In some embodiments, the reward includes at least one of: a reduction of a cost of a subscription to the DL-TDoA network, an addition of credit to a user account for the DL-TDoA network, additional service in the DL-TDoA network, or a compensation of energy consumed to operate as the ad hoc anchor device.

In some embodiments, the electronic device includes ultra-wideband (UWB) communication capacity.

Aspects of the present disclosure also provide a method for adding an electronic device as an ad hoc anchor device to a DL-TDoA network. The method includes, receiving a request message to operate as the ad hoc anchor device in the DL-TDoA network from an electronic device, and determining whether the electronic device is located in a predetermined area. The method also includes, in response to the electronic device being located in the predetermined area, transmitting a confirmation message to the electronic device to allow the electronic device to operate as the ad hoc anchor device.

In some embodiments, the request message includes a location of the electronic device.

In some embodiments, the determining of whether the electronic device is located in the predetermined area includes, receiving a set of coordinates; and determining whether the location of the electronic is within a range determined by the set of coordinates.

In some embodiments, the method further includes transmitting a reward to the electronic device.

In some embodiments, the reward includes at least one of, a reduction of a cost of a subscription to the DL-TDoA network, an addition of credit to a user account for the DL-TDoA network, addition service in the DL-TDoA network, or a compensation of energy consumed to operate as the ad hoc anchor device.

In some embodiments, the method further includes configuring the electronic device as an initiator anchor device or a responder anchor device in the DL-TDoA network.

Aspects of the present disclosure provide a UWB device. The UWB device includes a transceiver operable to perform a UWB communication, and a memory for storing program instructions, device information, device locations, conditions required for operating as an ad hoc anchor in a downlink-time difference of arrival (DL-TDoA) network. The UWB device also includes a processor coupled to the transceiver and to the memory. The processor is operable to execute the program instructions, which, when executed by the processor, cause the UWB device to perform the following operations to join the DL-TDoA network as an ad hoc anchor device. The operations include: determining a location of the UWB device; determining whether a condition to operate as the ad hoc anchor device in the DL-TDoA network is satisfied; and in response to the condition being satisfied, transmitting a request message to operate as the ad hoc anchor device in the DL-TDoA network to a server device.

In some embodiments, the operations further include, receiving a confirmation message to operate as the ad hoc anchor device from the server device with session parameters; and operating as the ad hoc anchor according to the session parameters.

In some embodiments, the session parameters indicate the electronic device to operate as an initiator anchor device or a responder anchor device in the DL-TDoA network.

In some embodiments, the operating as the ad hoc anchor device includes, receiving a poll message, as the responder anchor device, from an initiator anchor device in the DL-TDoA network; and transmitting a timestamp to the initiator anchor device. The timestamp represents the precise time a message is transmitted by the ad hoc. In some embodiments, the ad hoc anchor device also transmits a current location with the timestamp, to the initiator anchor. In some embodiments, the location is transmitted via out-of-band (OOB) means.

In some embodiments, the operating as the ad hoc anchor device includes, transmitting a poll message, as the initiator anchor device, to a responder anchor device in the DL-TDoA network; and receiving a timestamp of the responder anchor device. The timestamp represents the precise time a message is transmitted by the responder anchor device. In some embodiments, the ad hoc anchor device also receives a current location of the responder anchor (e.g., the location when the responder transmits the timestamp). In some embodiments, the location is received via an OOB means.

In some embodiments, the timestamp is transmitted in a predetermined slot indicated by the session parameters.

In some embodiments, the operations further include transmitting the location or a medium access control (MAC) address to the server device through out-of-band (OOB) means.

In some embodiments, the operations further include transmitting a status of the ad hoc anchor device to the initiator anchor device.

In some embodiments, the determining of the location includes, receiving a set of TDoA data from one or more other anchor devices in the DL-TDoA network; and computing the location using a multilateration algorithm based on the set of TDoA data.

In some embodiments, the one or more other anchor devices include at least one non-ad hoc anchor device.

In some embodiments, the determining of the location includes, receiving a set of global positioning system (GPS) signals; and computing the location using the GPS signals.

In some embodiments, the operations further include, in response to the condition not being satisfied, terminating transmitting the request message to the server device.

In some embodiments, the operations further include receiving a reward from the server device.

In some embodiments, the reward includes at least one of: a reduction of a cost of a subscription to the DL-TDoA network, an addition of credit to a user account for the DL-TDoA network, additional service in the DL-TDoA network, or a compensation of energy consumed to operate as the ad hoc anchor device.

In some embodiments, the electronic device includes ultra-wideband (UWB) communication capacity.

Aspects of the present disclosure provides a device for adding an electronic device as an ad hoc anchor device to a DL-TDoA network. The device includes a communication interface that receives a request message from an electronic device, the message including a location of the electronic device and a request to operate as the ad hoc anchor device in the DL-TDoA network. The device also includes a memory storing a plurality of processor-executable instructions and a set of coordinates that determine an area, and a processor executing the instructions to perform operations. The operations include determining whether the electronic device is located in a predetermined area. The operations also include in response to the electronic device being located in the predetermined area, transmitting a confirmation message to the electronic device to allow the electronic device to operate as the ad hoc anchor device.

In some embodiments, the request message includes a location of the electronic device.

In some embodiments, the determining of whether the electronic device is located in the predetermined area includes, receiving a set of coordinates; and determining whether the location of the electronic is within a range determined by the set of coordinates.

In some embodiments, the operations further include transmitting a reward to the electronic device.

In some embodiments, the reward includes at least one of, a reduction of a cost of a subscription to the DL-TDoA network, an addition of credit to a user account for the DL-TDoA network, addition service in the DL-TDoA network, or a compensation of energy consumed to operate as the ad hoc anchor device.

In some embodiments, the operations further include configuring the electronic device as an initiator anchor device or a responder anchor device in the DL-TDoA network.

Those skilled in the art will appreciate the scope of the present disclosure and realize additional aspects thereof after reading the following detailed description of the preferred embodiments in association with the accompanying drawing figures.

### BRIEF DESCRIPTION OF THE DRAWING FIGURES

The accompanying drawing figures incorporated in and forming a part of this specification illustrate several aspects of the disclosure, and together with the description, serve to explain the principles of the disclosure.
FIG. 1 illustrates a schematic view of an example system 100 for densifying a DL-TDoA network, according to some aspects of the present disclosure.
FIGS. 2A and 2B respectively illustrate a DL-TDoA network before and after densification, according to some aspects of the present disclosure.
FIG. 3 illustrates a signal diagram amongst elements in system 100, according to some aspects of the present disclosure.
FIG. 4 shows pre-configured areas available for adding ad hoc anchors, according to some aspects of the present disclosure.
FIG. 5 shows slots allocated for communication in ranging rounds of a DL-TDoA network, according to some aspects of the present disclosure.
FIG. 6A illustrates an example block diagram of an electronic device, according to some aspects of the present disclosure.
FIG. 6B illustrates an example block diagram of an application server, according to some aspects of the present disclosure.
FIG. 7A illustrates an example method for a tag to join a DL-TDoA network as an ad hoc anchor, according to some aspects of the present disclosure.
FIG. 7B illustrates an example method for an application server to add a tag into a DL-TDoA network as an ad hoc anchor, according to some aspects of the present disclosure.

### DETAILED DESCRIPTION

The embodiments set forth below represent the necessary information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. Additionally, like reference numerals denote like features throughout specification and drawings.

It should be appreciated that the blocks in each signaling diagram or flowchart and combinations of the signaling diagrams or flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each signaling diagram or flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction for performing the functions described in connection with a block(s) in each signaling diagram or flowchart. Since the computer program instructions may be equipped in a computer or other programmable data processing devices, instructions that generate a process executed by a computer as a series of operational steps are performed by the computer or other programmable data processing devices and operate the computer or other programmable data processing devices may provide steps for executing the functions described in connection with a block(s) in each signaling diagram or flowchart.

Hereinafter, embodiments are described in detail with reference to the accompanying drawings. Further, although a communication system using ultra-wideband (UWB) is described in connection with embodiments, as an example, the embodiments may also apply to other communication systems with similar technical background or features. For example, a communication system using Bluetooth or ZigBee may be included therein. Further, embodiments may be modified in such a range as not to significantly depart from the scope of the present disclosure under the determination by one of ordinary skill in the art and such modifications may be applicable to other communication systems.

UWB may refer to a short-range high-rate wireless communication technology using a wide frequency band of several hundreds of MHz to several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known, also referred to as anchors or anchor devices). The present disclosure assumes that the user is carrying a device capable of communicating through UWB (referred to as "UWB-enabled user device" or simply user device).

As used herein, a "slot," a "ranging round," a "period," and a "block" each refers to a time period. A ranging round may include a plurality of slots or a plurality of periods, and a block may include one or more ranging rounds.

As used herein, an ad hoc anchor refers to an electronic device that is added to a DL-TDoA network to operate as a DT-anchor for densifying the DL-TDoA network, as allowed by an application server. In embodiments of the present disclosure, an "anchor" is interchangeable with a "DT-anchor", and a "tag" is interchangeable with a "DT-tag".

As used herein, a "location" and a "position" of an object are interchangeable. In various embodiments, a location/position of an object refers to a set of two-dimensional coordinates of the object or a set of three-dimensional coordinates of the object in a three-dimensional space.

Ultra-Wideband (UWB) is a wireless communication technology that uses a wide bandwidth, typically about 500 MHz or larger, or has a 10 dB bandwidth greater than 20% of the center frequency for communication. DL-TDoA is a UWB feature which enables a UWB device (e.g., a tag or a DT-tag) to accurately determine its position without being tracked. In a UWB DL-TDoA network, an infrastructure of anchors (or DT-anchors) is deployed and broadcasts messages that UWB devices/tags can use to compute their locations.

A DL-TDoA network often includes multiple anchors organized as clusters and distributed over a deployment area. A cluster is a set of anchors that exchange DL-TDoA messages (or DTMs) to provide a positioning service to the tags in the specific area covered by the cluster. The cluster often includes an initiator anchor and one or more responder anchors. A tag is then able to anonymously locate within this area by listening to the messages (poll DTMs, response DTMs, final DTMs) sent by the anchors. For example, a tag can localize itself using timing information (transmitted in the DTMs) and the locations of the anchors (transmitted in the DTMs or provided through out-of-band (OOB) means) based on a multilateration algorithm.

However, the existing DL-TDoA network has limitations. For example, the cost to deploy a DL-TDoA network can be high. Providing accurate indoor localization within in a wide area (e.g., a shopping mall, an airport, etc.) requires installing and operating a significant amount of anchors. Also, a DL-TDoA network can have limited coverage. It is not always feasible for a DL-TDoA network to cover a hundred percent of an area, due to obstacles and/or walls. Physical constraints also exist. Typically, anchors are often mounted on a wall or a ceiling. Some areas (terraces, areas with a high ceiling) may not offer any place to permanently install an anchor.

The present disclosure addresses those challenges, and provides a technical solution to densify a DL-TDoA network, by dynamically adding ad hoc anchors to an existing infrastructure. The technical solution allows to improve the coverage and accuracy of location positioning within a DL-TDoA network, without additional cost, by dynamically adding ad hoc anchors. It can also allow an operator to deploy a minimum set of anchors to provide a "basic" coverage, and let users or third parties (e.g., shop owners in a mall) to increase the density of anchors and expand the coverage.

In the present disclosure, a UWB device (e.g., a tag) evaluates whether conditions required to operate as an ad hoc anchor are satisfied. After the UWB device is allowed to operate as an ad hoc anchor, the UWB device operates simultaneously as both a tag and an ad hoc anchor. The UWB device stops operating as an ad hoc anchor when the required conditions are no longer satisfied. Meanwhile, an application server configures a DL-TDoA network to enable dynamic addition of ad hoc anchors. The application server reserves slots within a ranging round to be allocated to an ad hoc anchor. The application server also specifies areas where ad hoc anchors may be added, determines whether a UWB device may operate as an ad hoc anchor, and provides the DL-TDoA session parameters.

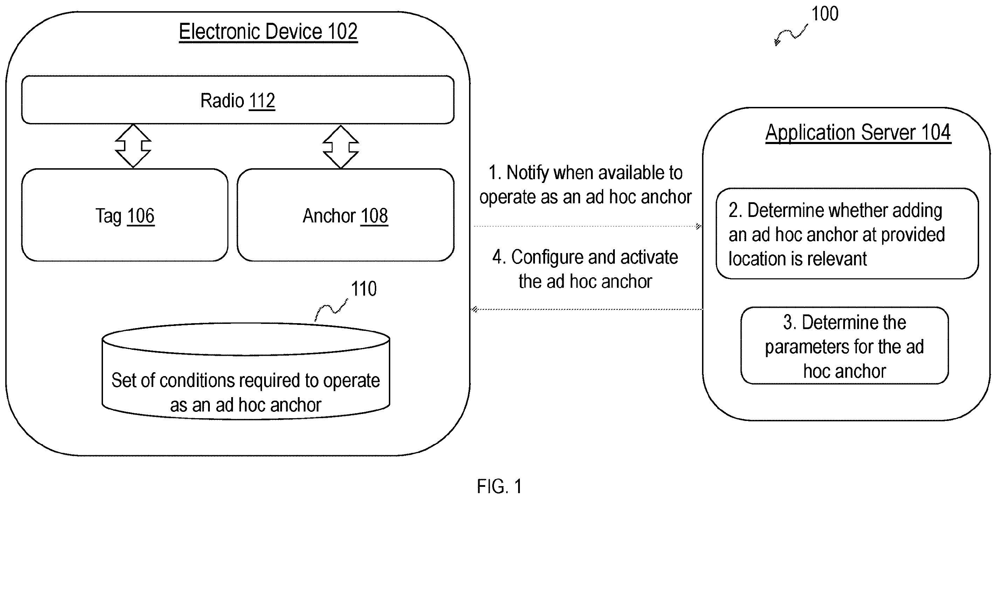

FIG. 1 illustrates an overview of a system 100 for densifying a DL-TDoA network, according to embodiments of the present disclosure. System 100 may include an electronic device 102 and an application server 104, communicatively coupled with each other. Electronic device 102 may operate as an ad hoc anchor in a DL-TDoA network, when certain conditions are satisfied and request is allowed by application server 104. The ad hoc anchor may expand the coverage of DL-TDoA network, thus improve the localization accuracy of tags (e.g., electronic device 102 and other electronic devices using the DL-TDoA network for localization). The ad hoc anchor may be dynamically added/dropped based on the predetermined conditions, as needed. In various embodiments, the DL-TDoA network can also be other suitable positioning networks operated based on a similar mechanism.

Electronic device 102 may include any suitable device with wireless connection capabilities such as UWB. For example, electronic device 102 may include a mobile device, used by any user, such as a smartphone, a laptop, a tablet, a personal digital assistant (PDA), a computing device, wearable devices (e.g., a smart watch, or the like), or so. Electronic device 102 may also include an access point to the DL-TDoA network, such as a computing device of a shop owner. Electronic device 102 may operate as a tag and an ad hoc anchor simultaneously, at all times or at desired times.

Electronic device 102 may include a radio function, shown as a "radio 112", which has the capability to communicate with application server 104. Radio 112 may generally refer to the wireless communication capabilities of electronic device 102 and may include the transmission and/or reception of signals at various frequencies. For example, radio 112 may transmit/receive signals of at least one of UWB, WiFi, cellular, satellite, Bluetooth Low Energy (BLE), near-field communication (NFC), or the like. In some embodiments, electronic device 102 includes a UWB device, and radio 112 communicates with application server 104 using UWB and/or OOB means such as WiFi or BLE.

Electronic device 102 may also include a function as a tag and a function as an anchor, e.g., having the capabilities to operate as a tag and an anchor. The tag function is shown as a "tag 106" and the anchor function is shown as an "anchor 108". Electronic device 102, as tag 106, may localize itself based on TDoA data received from the communication of other anchors (not shown), e.g., in each ranging round. Meanwhile, electronic device 102 may evaluate regularly whether one or more conditions in the set of conditions required to operate as an ad hoc anchor 110 (or set 110), as stored in electronic device 102, are satisfied. When at least one of these conditions in set 110 are met, electronic device 102 may notify application server 104 that it is available to operate as an ad hoc anchor (operation 1). Electronic device 102 may transmit its current location to application server 104 in the notification. After being allowed by application server 104, electronic device 102 may be activated to operate as an anchor 108 (e.g., an ad hoc anchor), alternatively or additionally to tag 106. When none of the conditions in set of conditions required to operate as an ad hoc anchor is satisfied, electronic device 102 may stop operating as anchor 108. Electronic device 102 may include the suitable software and/or hardware for its operations in radio 112, and as tag 106 and anchor 108.

Set 110 may be downloaded and stored by the user of electronic device 102 when communicatively connected to the DL-TDoA network. In some embodiments, set 110 includes one or more predetermined conditions. Example of the predetermined conditions include: (i) the location of electronic device 102 has been unchanged for at least a predetermined period of time; (ii) the accuracy of location positioning of electronic device 102 is estimated to be higher than a predetermined accuracy level (e.g., within a predetermined distance); (iii) electronic device 102 is plugged in; (iv) the battery level of electronic device 102 is equal to or higher than a predetermined percentage; (v) the user of electronic device 102 explicitly allows/agrees to electronic device 102 to operate as an anchor (e.g., an ad hoc anchor). In some embodiments, conditions (i)-(v) are configured by an operator of the DL-TDoA network. In some embodiments, condition (v) is required to be satisfied prior to electronic device 102 notifying application server 104.

Application server 104 may configure the DL-TDoA network, such as the deployment of anchors, as well as their operating parameters. Application server 104 may have wired or wireless communication capabilities to facilitate its communication with electronic device 102. Application server 104 may respond to requests/notifications from electronic device 102, and may configure the operation of the ad hoc anchor. As shown in FIG. 1, upon receiving the notification from electronic device 102 (operation 1), application server 104 may determine whether adding an hoc anchor at the provided location is relevant (operation 2). After determining that it is relevant, application server 104 may then determine the parameters for the ad hoc anchor (operation 3). Application server 104 may further transmit the parameters to electronic device 102 to configure and activate the ad hoc anchor (operation 4). Application server 104 may include the suitable software and/or hardware for its operations in responding to electronic device 102 and configuring the ad hoc anchor.

Electronic device 102 and application server 104 may be communicatively connected through a network control device, such as a gateway, a hub, a modem, a range extender, a set-up box, a router, and/or a mobile device. The network control device may communicate data and signals with wired/wireless communication links with devices (e.g., anchors and/or tags) in a local network covered by anchors of the DL-TDoA network. The local network may be an automation network built on one or more wireless communication protocols such as Matter, Wi-Fi, Bluetooth, near field communication (NFC), wireless local area network (LAN) Matter, Zigbee, IrDA, etc. The local network may be in a residential area, a hospital, a shopping mall, a commercial building, a factory plant, a playground, a school, or the like. The network control device may also be communicatively connected to a cloud network through wired/wireless communication links, and further be communicatively connected to application server 104 through the cloud network. For example, signals and data of the DL-TDoA network may be flown to application server 104, and vice versa, through the network control device. In various embodiments, the network control device communicates in wireless communication protocols such as Matter, Zigbee, Bluetooth (BLE), WiFi, IrDA, etc.

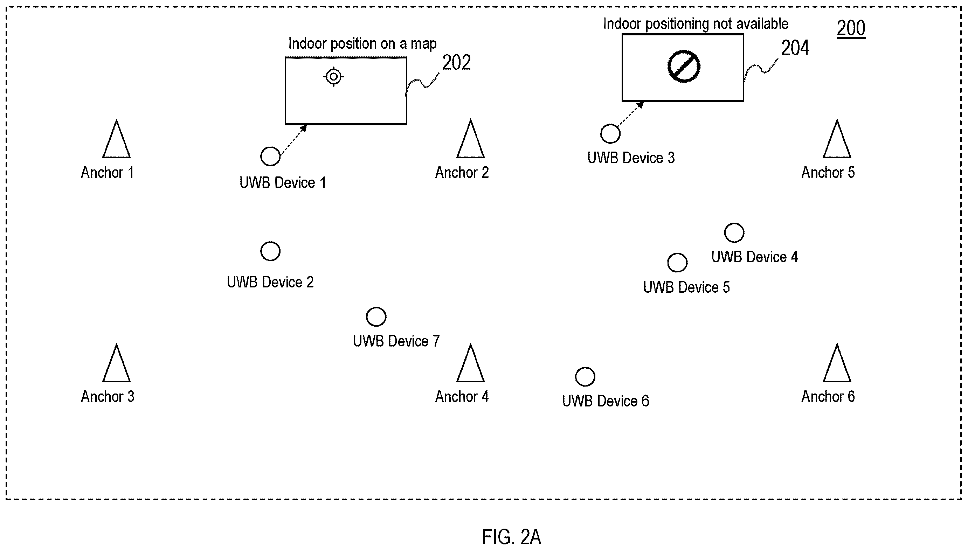

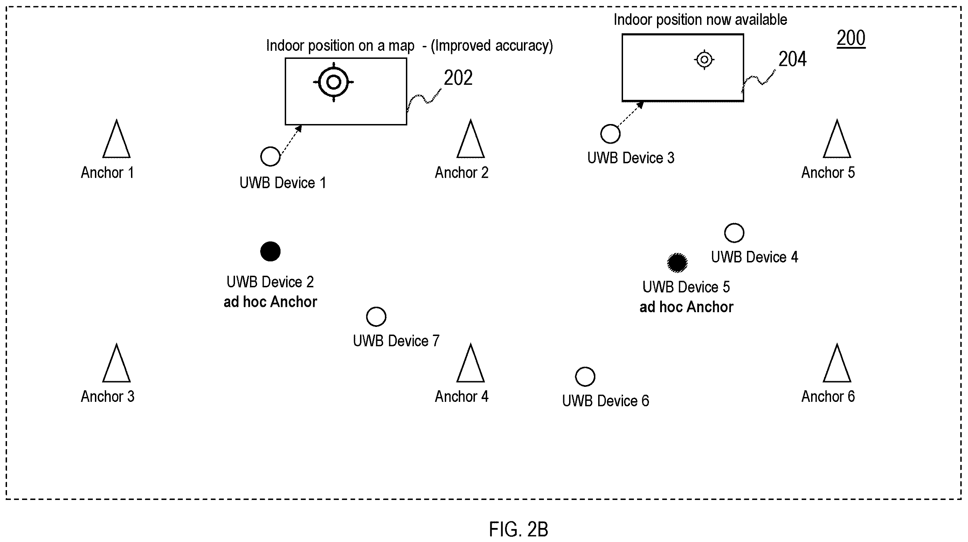

FIGS. 2A and 2B show a DL-TDoA network 200 before and after densification, according to embodiments of the present disclosure. UWB devices 1, 2, 3, 4, 5, 6, and 7 are each an example of electronic device 102. As shown in FIGS. 2A and 2B, DL-TDoA network 200 includes a plurality of anchors (e.g., DT-anchors) 1, 2, 3, 4, 5, 6, 7. UWB devices 1-7 may each be an example of electronic device 102, and may be distributed in the area covered by DL-TDoA network 200. The area may include a residential area, a hospital, a shopping mall, a commercial building, a factory plant, a playground, a school, or the like. Anchors 1-7 may include an initiator anchor and a plurality of responder anchors. In some embodiments, anchors 1-7 include at least one non-ad hoc anchor. In some embodiments, anchors 1-7 include at least one ad hoc anchor. After receiving a poll message from the initiator anchor, a responder anchor may send a response message to the initiator anchor with a timestamp, which represents the precise time that the response message is transmitted by the responder anchor. One or more of UWB devices 1-7 may listen to the communication amongst the anchors (e.g., nearest anchors) to receive a set of TDoA data (e.g., including the timestamps transmitted by each responder anchor) regularly, and may compute its location based on the TDoA data and a multilateration algorithm. In some embodiments, timestamps from at least three anchors are needed to determine the location of a UWB device using a trilateration algorithm.

As shown in FIG. 2A, UWB device 1 can listen to the response messages sent by anchors 1, 2 and 3, and compute its location using a trilateration algorithm. However, UWB device 3 can only listen to the response messages sent by anchors 2 and 5 (e.g., due to its further distances from other anchors), and is therefore not able to determine its location. Maps 202 and 204 are shown to illustrate the localization results of UWB devices 1 and 3. For example, maps 202 and 204 may be displayed respectively on UWB devices 1 and 3 to show the locations of UWB devices 1 and 3 when a positioning application using the DL-TDoA network is launched. As shown in FIG. 2A, UWB device 1 can determine and show its location of UWB device 1 on map 202, while UWB device 3 fails to determine its location. As a result, map 204 fails to show the location of UWB device 3, or map 204 may display the its location being not available on map 204.

As shown in FIG. 2B, it is assumed that UWB device 2 and UWB device 5 now operate as ad hoc anchors (e.g., ad hoc DT-anchors). UWB devices 2 and 5 may now communicate with other anchors to provide more TDoA data for nearby UWB devices to compute their respective locations. In various embodiments, UWB devices 2 and 5 can each function as an initiator anchor (e.g., initiator ad hoc anchor or initiator ad hoc DT-anchor) or a responder anchor (e.g., responder ad hoc anchor or responder ad hoc DT-anchor). For example, an initiator ad hoc anchor may transmit a poll message to responder anchors (e.g., ad hoc responder anchors and/or non-ad hoc responder anchors) and may receive the response messages from these responder anchors. A responder ad hoc anchor may transmit a timestamp to the initiator anchor (ad hoc or non-ad hoc anchor). In some embodiments, the responder ad hoc anchor may also transmit its current location via an OOB means, to the initiator anchor. In some embodiments, a responder ad hoc anchor may also transmit its status as an ad hoc anchor such that a UWB device, receiving the timestamp of the responder ad hoc anchor, may apply less weight on the location of the responder ad hoc anchor when computing its location. Adding UWB devices 2 and 5 may increase the number of functioning anchors in DL-TDoA network 200 at desired locations, and densify DL-TDoA network 200. TDoA data may be more available to more UWB devices.

As shown in FIG. 2B, after adding UWB devices 2 and 5 as anchors, UWB device 1 may determine its location more accurately, with the TDoA data provided by UWB device 2 as a responder ad hoc anchor. UWB device 3 may now determine its location (using anchors 2 and 5, and the TDoA data provided UWB device 5 as a responder ad hoc anchor). Map 202 now shows the location of UWB device 1 of improved accuracy, and map 204 shows the location of UWB device 3 being available.

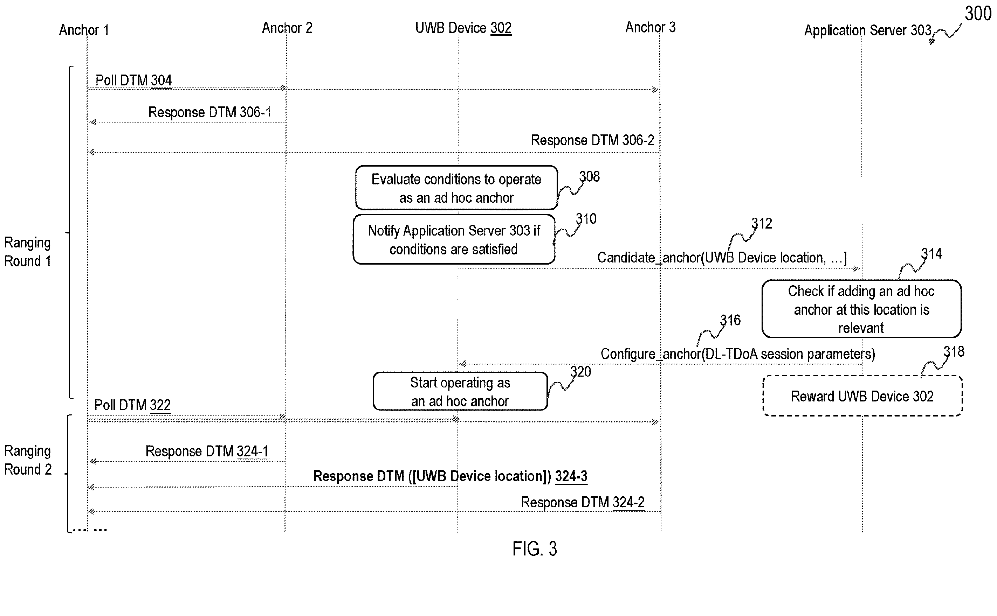

FIG. 3 shows a signaling diagram 300 of UWB communication amongst elements in a DL-TDoA network, according to embodiments of the present disclosure. Signaling diagram 300 shows the process through which a UWB device 302 (e.g., a tag) is activated as an ad hoc anchor. The DL-TDoA network may include a plurality of anchors (e.g., non-ad hoc and/or ad hoc DT-anchors), and an application server 303. For ease of illustration the plurality of anchors are represented by anchor 1, anchor 2, and anchor 3. Application server 303 may communicate with anchors 1-3 to configure their parameters in the DL-TDoA process. For example, application server 303 may allocate a respective slot for each of the anchors 1-3 for them to transmit their response messages to the initiator anchor. Application server 303 may also determine UWB device 302 may be an example of electronic device 102 and may operate as a tag (e.g., initially) in the area covered by the DL-TDoA network. For example, UWB device 302 may be located near the cluster formed by anchors 1-3. UWB device 302 may listen to the communication amongst anchors 1-3, and may compute its location based on the TDoA data received. It is assumed that anchor 1 may be the initiator anchor, and anchors 2 and 3 may be the responder anchors.

At the beginning of a ranging round (e.g., ranging round 1), UWB device 302 may operate as a tag (e.g., a DT-tag), and may listen to poll DTM 304 transmitted by anchor 1 and response DTMs (306-1 and 306-2) transmitted by anchors 2 and 3. UWB device 302 may receive TDoA data from anchors 2 and 3, which include the timestamps transmitted by anchors 2 and 3. UWB device 302 may determine its location based on the TDoA data and a multilateration algorithm.

UWB device 302 may then perform step 308 (e.g., regularly or at predetermined intervals such as every minute), at which UWB device 302 evaluates whether one or more conditions required to operate as an ad hoc anchor are satisfied. The detailed description of the conditions may be referred to as the description of set 110 in FIG. 1.

If UWB device 302 determines that at least one condition is satisfied, UWB device 302 may perform step 310, at which UWB device 302 notifies application server 303 by sending a message 312 to application server 303 indicating that it is ready to operate as an anchor. Message 312 may include a request to be a candidate anchor. In some embodiments, message 312 include the current location of UWB device 302 and a unique identification number of UWB device 302. In some embodiments, message 312 does not include any personal information of UWB device 302 such as the user information or specific device information, such that UWB device 302 can stay anonymous. In some embodiments, message 312 includes one or more other parameters such as the parameters that satisfy the one or more conditions in set 310. For example, the parameters may include the time period that UWB device 302's location stays unchanged, the percentage of battery, the explicit permission from the user that UWB device 302 can operate as an anchor, etc.

In some embodiments, UWB device 302 determines its location by performing ranging (e.g., two-way ranging) with other nearby anchors). In some embodiments, UWB device 302 determines its location using received signals of global positioning system (GPS) and a multilateration algorithm.

In some embodiments, UWB device 302 transmits its location to application server 303 via an OOB means such as BLE and/or WiFi, together with the medium access control (MAC) address in message 312.

If UWB device 302 determines that none of the conditions in set 310 is satisfied, UWB device 302 may not transmit message 312, or transmit a message to notify application server 303 about its termination as an ad hoc anchor. UWB device 302 may thus stop transmitting response DTMs to anchor 1.

Receiving message 312, application server 303 may perform step 314, at which application server 303 verifies if adding an ad hoc anchor at this location (e.g., the current location of UWB device 302) to the DL-TDoA network is relevant. Application server 314 may check whether the location of UWB device 302 is within a predetermined area.

If yes, application server 303 may transmit a message 316, which includes a confirmation to UWB 302 and certain DL-TDoA session parameters for configuring the new ad hoc anchor (e.g., operated by UWB device 302). For example, message 316 may include information about the slot allocated to UWB device 302 as an ad hoc anchor such that UWB device 302 can transmit a timestamp in the allocated slot. The timestamp may represent the precise time at which the ad hoc anchor transmits the message. In some embodiments, UWB device 302 also transmits its current location in the allocated slot or in an OOB means. Other parameters, such as the type of anchors to be operated by UWB device 302, may also be included. For example, application server 303 may configure UWB device 302 as a responder anchor or an initiator anchor. Application server 303 may also configure UWB device 302 to be in a single cluster or multiple clusters of non-ad hoc anchors. Details about the predetermined area and the slot allocation may be described as follows.

Receiving message 316, UWB device 302 may perform step 302, at which UWB device 302 starts operating as an ad hoc anchor. UWB device 302 may create and starts the DL-TDoA session with the parameters provided in message 316. As shown in FIG. 3, steps 308, 310, 314, and 320 may be performed in a same ranging round (e.g., ranging round 1).

In the next ranging round (ranging round 2), anchor 1 may transmit a poll DTM 322, and anchors 2 and 3 may transmit respective response DTMs 324-1 and 324-2. UWB device 302 may compute its current location by listening to anchors 1-3 in the next ranging round, and transmit a response DTM 324-3 to anchor 1. Response DTM 324-3 may include the timestamp of UWB device 302, representing the precise time that response DTM 324-3 is transmitted. In some embodiments, response DTM 324-3 includes a OOB message that includes the current location of UWB device 302, as computed by UWB device 302 as a tag. In some embodiments, response DTM 324-3 includes a status indication of an ad hoc anchor, allowing any tags (e.g., including UWB device 302) receiving response DTM 324-3 to apply less weight to location estimations involving response DTM 324-3 (compared to locations estimations determined exclusively on messages received from non-ad hoc anchors such as anchors 2 and 3).

In signaling diagram 300, as an example, it is assumed that UWB device 302 is configured by application server 303 as a responder anchor in the cluster that includes anchors 1-3. In some embodiments, UWB device 302 is configured by application server 303 as an initiator anchor. For example, UWB device 302, as an initiator anchor, may transmit a poll DTM at the beginning of ranging round 2, and may receive response DTMs from anchors 1-3. In some embodiments, UWB device 302 may be configured by application server 303 to participate to multiple clusters, formed by different groups of non-ad hoc anchors.

Optionally, application server 303 may perform step 318, at which application server 303 rewards UWB device 302 for being part of the DL-TDOA infrastructure. Examples of the reward may include: (i) reducing the cost of subscription to the positioning service using the DL-TDoA network; (ii) adding credit to the user account of the positioning service; (iii) providing additional services to UWB device 302, (iv) compensating the energy consumed to serve as an ad hoc anchor. In various embodiments, other suitable means may also be applied. The reward may be fixed or variable with the duration during which UWB device 302 serves as an ad hoc anchor. In various embodiments, step 318 can be performed after sending message 316, and before or after step 320. In some embodiments, application server 303 rewards UWB device 302 at the end of each ranging round when UWB device 302 operates as an ad hoc anchor. In some embodiments, application server 303 rewards UWB device 302 after UWB device 302 stops operating as an ad hoc anchor.

In some embodiments, while operating as an anchor, UWB device 302 also continues to operate as a tag. For example, UWB device 302 may determine its location while functioning as a tag. A user may specify parameters on UWB device 302 that limit the time period that UWB device 302 can operate as an anchor. For example, a user may set the ratio of ranging blocks during which UWB device 302 operates as an anchor and ranging blocks during which UWB device 302 operates as a tag. In another example, a user may set a certain time period during which the UWB device 302 can operate as a tag, an anchor, or both. In some embodiments, in a FiRa DL-TDoA session, the parameter DL_TDOA_BLOCK_SKIPPING may be configured on the session associated with the tag, to allow UWB device 302 to operate as an anchor during ranging blocks which are skipped by the tag.

In various embodiments, application server 303 may allow more than one UWB devices to operate as ad hoc anchors during a same period of time. In some embodiments, application server 303 limits the number of ad hoc anchors to be no greater than a predetermined value. In some embodiments, when one ad hoc anchor stops operating, application server 303 may continue to allow other ad hoc anchors to join until the predetermined number is reached.

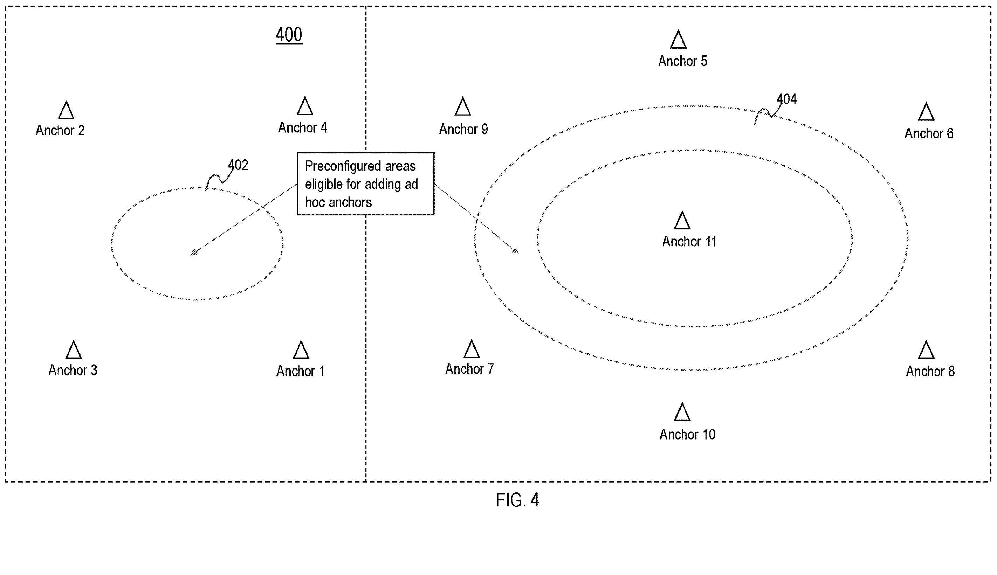

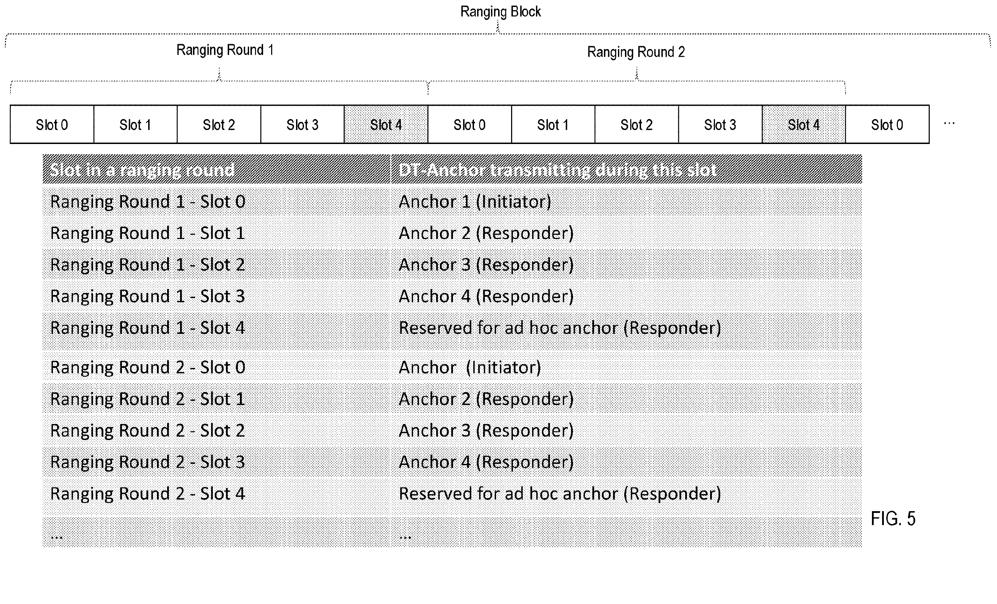

The DL-TDoA network may be preconfigured to allow easy addition of ad hoc anchors. FIGS. 4 and 5 show examples of preconfiguration performed on the DL-TDoA network. FIG. 4 shows that an operator or administrator of the DL-TDoA network may predetermine certain areas in which a UWB device can be added as an ad hoc anchor. The application server (e.g., 104 or 303) may not allow a UWB device (e.g., 302 or electronic device 102) outside the predetermined area(s) to be added as an ad hoc anchor. In some embodiments, the application server may be stored with a set of coordinates, which correspond to an area not covered by any non-ad hoc anchors. When receiving a message (e.g., message 312) from a UWB device with a timestamp of the UWB device, the application server may compare the coordinates of the current location of the UWB device with the set of coordinates to verify whether the UWB device is located in the area (e.g., step 314). If yes, the application server may allow/confirm the request and configures the UWB device (e.g., message 316). If no, the application server rejects the request. Optionally, the application server may notify the UWB device for it being outside the predetermined area.

As shown in FIG. 4, DL-TDoA network 400 may include a plurality of non-ad hoc anchors 1, 2, 3, 4, 5, 6, 7, 8, 9, 10, and 11 distributed in an area. An operator/administrator of the application server of DL-TDoA network 400 may preconfigure area 402 and 404 to be areas eligible for adding UWB devices as ad hoc anchors. For example, anchors 1, 2, 3, and 4 may represent a first cluster, and anchors 5, 6, 7, 8, 9, 10, and 11 may represent a second cluster. Area 402, with an oval shape, may represent an area not covered by any anchors in the first cluster. Area 404, with a ring shape, may represent an area not covered by any anchors in the second cluster. As shown in FIG. 4, although anchor 11 is positioned approximately in the center of a circle formed by anchors 5-10, the distances between anchor 11 and other anchors may be too large. DL-TDoA network 400 may not have sufficient coverage between anchor 11 and anchors 5-10. The addition of ad hoc anchors in area 402 and/or area 404 may effectively increase the coverage of DL-TDoA network 400, and improve the availability and accuracy of localization of a UWB device.

FIG. 5 shows preconfiguration of slot allocation for non-ad hoc anchors and ad hoc anchors, according to some embodiments. When configuring a DL-TDoA network (e.g., DL-TDoA network 400), an operator/administrator may reserve one or more slots for a cluster in a ranging round for ad hoc anchors. In some embodiments, application server (e.g., 104 or 303) may notify the slot allocated to an ad hoc anchor (e.g., operated by electronic device 102 or UWB device 302) in a message (e.g., 316). The ad hoc anchor may then transmit a timestamp representing the precise time of transmission, and optionally its status as an ad hoc anchor, in the allocated slot. In some embodiments, the ad hoc anchor also transmits its current location with the timestamp or in an OOB means.

In the example shown in FIG. 5, a cluster may include non-ad hoc anchors 1, 2, 3, and 4, allocated with slots 0, 1, 2, and 3. Anchor 1 may be the initiator anchor, and anchors 2-4 may be responder anchors. Slot 4 of each ranging round is reserved for an ad hoc anchor and not used by any deployed non-ad hoc anchor in the cluster. For example, slot 4 may be allocated to an ad hoc anchor located in the vicinity of the cluster of non-ad hoc anchors 1-4 associated with this ranging round. In some embodiments, more than one slot may be reserved for ad hoc anchors. FIG. 3A illustrates an example of electronic device 102, e.g., a UWB device operating as a tag and/or an ad hoc anchor. Electronic device 102 may be in the form of a cellular telephone, a smartphone, a laptop computer, a tablet, a personal digital assistant (PDA), a computing device, or any other mobile device having wireless connection capability. In some embodiments, electronic device 102 includes a processor 603, a digital signal processor (DSP) 605, a transceiver 607, an antenna 617, a memory 609, an input device 611, an output device 613, and a bus 615. The hardware components of electronic device 102 may be communicatively coupled to bus 615. In some embodiments, bus 615 can be used for processor 603 to communicate between cores and/or with memory 609. Processor 603 may include one or more general-purpose processors and/or one or more special-purpose processors (such as digital signal processing chips, graphics acceleration processors, and/or the like). Processor 603 may process wireless signals 619 received by transceiver 607, such as DL-TDoA signals, ranging signals, and/or data from UWB communication. In some embodiments, processor 603 processes the received TDoA data, computes the current location using the TDoA data, transmits a timestamp and/or the location, and processes the messages received from an application server. Processor 603 may configure electronic device 102 to be an ad hoc anchor according to the parameters sent by the application server. Input device 611 may include a camera, a mouse, a keyboard, a touch sensitive screen/display, a touch pad, a keypad, and/or the like. An output device 613 may include a display, a printer, and/or the like. In some embodiments, a user may load a positioning application, which automatically computes the location of electronic device 102.

Electronic device 102 may include a transceiver 607 communicatively coupled to bus 615. Transceiver 607 may be operable to transmit and receive wireless signals 619 via antenna 617. Wireless signals 619 may be transmitted/received via a wireless network (e.g., the local wireless network provided by the DL-TDoA network). In some embodiments, the local wireless network may include WiFi, a Personal Access Network (PAN), such as Matter, Bluetooth^{®} or Zigbee^{®}, or a cellular network (e.g., 4G, 5G). Transceiver 607 may be configured to receive wireless signals 619 via antenna 617 from a network control device (e.g., a gateway device), anchors (e.g., anchors 1-3 in FIG. 3), a cloud network, and/or the like. Electronic device 102 may also be configured to decode and/or decrypt, via the DSP 605 and/or processor 603, various signals received from the network control device, the anchors, the cloud network, and/or the like.

Memory 609 may include one or more non-transitory storage devices that can include local and/or network accessible storage, a disk drive, a drive array, an optical storage device, a solid-state storage device such as a random access memory ("RAM") and/or a read-only memory ("ROM"), a programmable ROM, a flash-updateable ROM, and/or the like. Such storage devices may be configured to implement any appropriate data storage, including without limitation, various file systems, database structures, and/or the like. In some embodiments, memory 609 includes a device database, including device information (e.g., unique device identification (ID), device keys, vendor information, device type, etc.) of electronic device 102. In some embodiments, memory 609 is stored with a set of conditions required to operate as an ad hoc anchor (e.g., set 110).

In various embodiments, functions/operations may be stored as one or more instructions or code in memory 609, such as on a computer-readable storage medium, such as RAM, ROM, FLASH, or disc drive, and executed by processor 603 or DSP6305. Electronic device 102 may also include software components (e.g., located within memory 609), including, for example, an operating system, device drivers, executable libraries, and/or other executable code, such as one or more application programs. The application programs may include computer programs, stored in memory 609, executed by processor 603 and/or DSP 365 to implement various functions under the control of the operating system. The computer programs may have been pre-packaged with electronic device 102 or may have been downloaded by a user into memory 609 of the electronic device 102. Some mobile applications may be more user-interactive applications, such as a positioning application to localize electronic device 102 and display the location of electronic device, whereas some other mobile applications may be less user-interactive in nature.

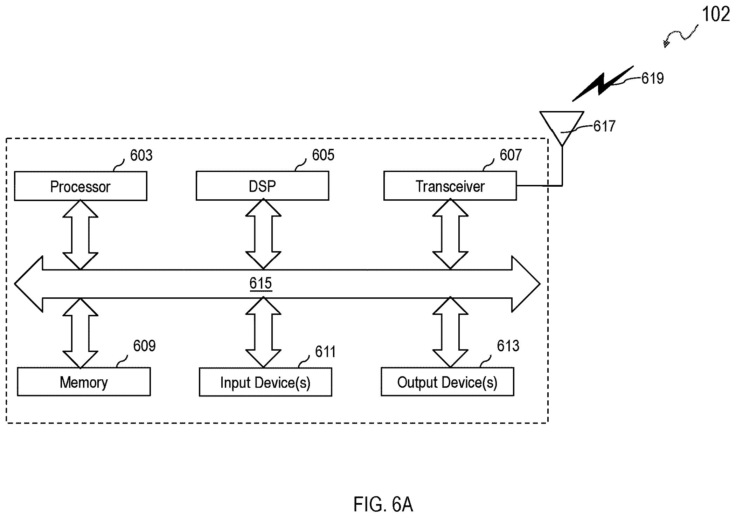

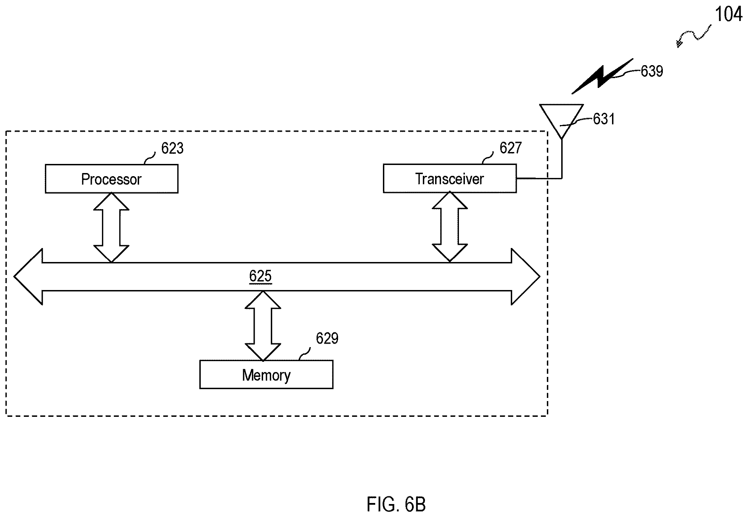

FIG. 6B illustrates an example of an application server 104. Application server 104 may include a processor 623, a memory 629, and a bus 625. In some embodiments, application server 104 includes a server computer.

Processor 623 may include one or more general-purpose processors and/or one or more special-purpose processors, similar to processor 603. Memory 629 may include one or more non-transitory storage devices, similar to memory 609. In some embodiments, memory 329 is stored with a set of coordinates used to verify the eligibility of an electronic device to operate as an ad hoc anchor (e.g., step 314 of FIG. 3). In some embodiments, processor 623 processes and responds to messages transmitted by electronic device 102 requesting to operate as an ad hoc anchor. In some embodiments, processor 623 compares the current location of electronic device 102 with the set of coordinates to determine the eligibility of electronic device 102 operating as an ad hoc anchor. In some embodiments, memory 629 is stored with session parameters for the non-ad hoc anchors in the DL-TDoA network, as well as those for the added ad hoc anchors. For example, the session parameters may include the parameters that dictate an anchor to be an initiator anchor or a responder anchor, and the slots allocated for each anchor.

In some embodiments, application server 104 receives signals and/or data from the DL-TDoA network via bus 625. For example, messages transmitted by electronic device 102 may be routed to a cloud network, which further transmits the messages to electronic device 102 through wired and/or wireless communication. In some embodiments, application server 104 is coupled to an application programming interface (API), which receives signals and/or data from the DL-TDoA network. In some embodiments, application server 104 receives signals and/or data from the DL-TDoA network from a communication interface such as Ethernet and/or Wireless interfaces. In some embodiments, application server 104 includes a transceiver 627 and an antenna 631 (communicatively coupled to transceiver 627) for wireless communication with anchors, electronic device 102, and/or a network control device. Transceiver 627 may be operable to transmit and receive wireless signals 639 via antenna 631. Wireless signals 639 may be transmitted/received via a wireless network. In some embodiments, the wireless network may be any wireless network such as a local wireless network, such as WiFi, a Personal Access Network (PAN), such as Matter, Bluetooth^{®} or Zigbee^{®}, or a cellular network (e.g., 4G, 5G). Optionally, application server 104 may include a DSP (not show) for decoding and/or decrypting various received signals .

Bus 625 may communicatively couple processor 623 and memory 629 such that processor 623 may execute instructions stored in memory 629 and may process received signals (e.g., 339), such as messages from electronic device 102.

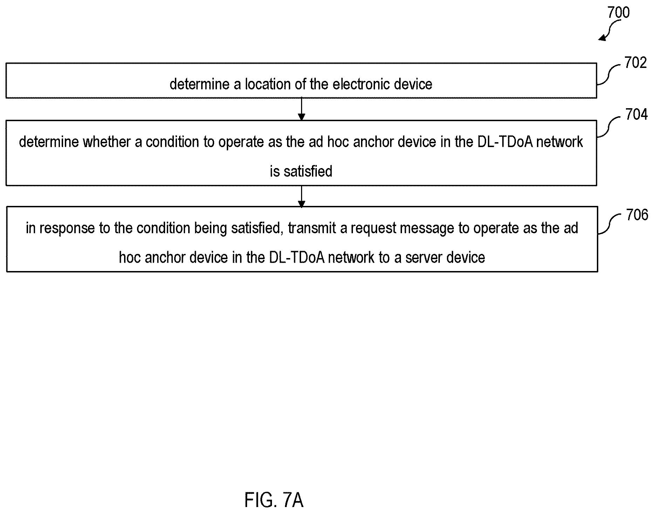

FIG. 7A is a flowchart of a method 700 for an electronic device 102/UWB device 302 (e.g., a tag) to join a DL-TDoA network as an ad hoc anchor, as to density the DL-TDoA network, according to some embodiments of the present disclosure. Method 700 is merely an example, and is not intended to limit the present disclosure beyond what is explicitly recited in the claims. Additional operations can be provided before, during, and after the method 700, and some operations described can be replaced, eliminated, or moved around for additional embodiments of method 700. For ease of illustration, FIG. 7A is described in connection with FIGS. 1 and 3.

At step 702, a location of the electronic device is determined. As shown in FIG. 3, at the beginning of a ranging round (e.g., ranging round 1), UWB device 302 may compute its current location based on TDoA data received in response DTMs 306-1, 306-2, ....

At step 704, it is determined whether a condition to operate as the ad hoc anchor device in the DL-TDoA network is satisfied. As shown in FIGS. 1 and 3, UWB device 302 (or electronic device 102) may determine whether a condition to operate as an ad hoc anchor is satisfied (step 308 in FIG. 3).

At step 706, in response to the condition being satisfied, a request message to operate as the ad hoc anchor device in the DL-TDoA network is transmitted to a server device. As shown in FIGS. 1 and 3, UWB device 302 (or electronic device 102) may notify application server 104 (or 303) its availability to operate as an ad hoc anchor (operation 1 in FIG. 1, step 310 in FIG. 3).

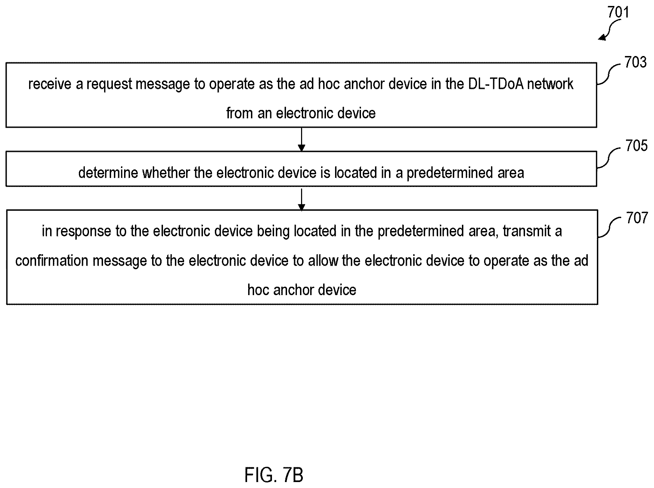

FIG. 7B is a flowchart of a method 701 for an application server 104/303 to add an electronic device (or a UWB device) as an ad hoc anchor into a DL-TDoA network, as to density the DL-TDoA network, according to some embodiments of the present disclosure. Method 701 is merely an example, and is not intended to limit the present disclosure beyond what is explicitly recited in the claims. Additional operations can be provided before, during, and after the method 701, and some operations described can be replaced, eliminated, or moved around for additional embodiments of method 701. For ease of illustration,

FIG. 7B is described in connection with FIGS. 1 and 3.

At step 703, a request message to operate as the ad hoc anchor device in the DL-TDoA network is received from an electronic device. As shown in FIGS. 1 and 3, application server 104 (or 303) receives a notification from an electronic device 102 (or UWB device 302) to request to operate as an ad hoc anchor (operation 1 in FIG. 1, step 310 in FIG. 3).

At step 705, it is determined whether the electronic device is located in a predetermined area. Application server 104 (or 303) may determine whether electronic device 102 (or UWB device 302) is located in a predetermined area (operation 2 in FIG. 1, step 314 in FIG. 3).

At step 707, in response to the electronic device being located in the predetermined area, a confirmation message to the electronic device to allow the electronic device to operate as the ad hoc anchor device is transmitted. Application server 104 (or 303) may transmit a message to electronic device 102 (or UWB device 302), with session parameters, to confirm and configure to electronic device 102 (or UWB device 302) (operation 4 in FIG. 1, message 316 in FIG. 3).

Thus, from one perspective, there has now been described a method for an electronic device to join a downlink time difference of arrival (DL-TDoA) network as an ad hoc anchor device is provided. The method includes, determining a location of the electronic device, and determining whether a condition to operate as the ad hoc anchor device in the DL-TDoA network is satisfied. The method also includes, in response to the condition being satisfied, transmitting a request message to operate as the ad hoc anchor device in the DL-TDoA network to a server device.

Those skilled in the art will recognize improvements and modifications to the preferred embodiments of the present disclosure. All such improvements and modifications are considered within the scope of the concepts disclosed herein and the claims that follow.

## Claims

1. A method for an electronic device to join a downlink-time difference of arrival (DL-TDoA) network as an ad hoc anchor device, comprising:
determining a location of the electronic device;
determining whether a condition to operate as the ad hoc anchor device in the DL-TDoA network is satisfied; and
in response to the condition being satisfied, transmitting a request message to operate as the ad hoc anchor device in the DL-TDoA network to a server device.

2. The method of claim 1, further comprising:
receiving a confirmation message to operate as the ad hoc anchor device from the server device with session parameters; and
operating as the ad hoc anchor according to the session parameters.

3. The method of claim 2, wherein the session parameters indicate the electronic device to operate as an initiator anchor device or a responder anchor device in the DL-TDoA network.

4. The method of claim 3, wherein the operating as the ad hoc anchor device comprises:
receiving a poll message, as the responder anchor device, from an initiator anchor device in the DL-TDoA network; and
transmitting at least one of a timestamp or the location to the initiator anchor device.

5. The method of claim 3, wherein the operating as the ad hoc anchor device comprises:
transmitting a poll message, as the initiator anchor device, to a responder anchor device in the DL-TDoA network; and
receiving a timestamp of the responder anchor device.

6. The method of claim 4, wherein the timestamp is transmitted in a predetermined slot indicated by the session parameters.

7. The method of claim 5, further comprising transmitting the location or a medium access control (MAC) address to the server device through out-of-band (OOB) means.

8. The method of claim 5 or claim 7, further comprising transmitting a status of the ad hoc anchor device to the initiator anchor device.

9. The method of any preceding claim, wherein the determining of the location comprises:
receiving a set of TDoA data from one or more other anchor devices in the DL-TDoA network; and
computing the location using a multilateration algorithm based on the set of TDoA data.

10. The method of claim 9, wherein the one or more other anchor devices comprise at least one non-ad hoc anchor device.

11. The method of any preceding claim, wherein the determining of the location comprises:
receiving a set of global positioning system (GPS) signals; and
computing the location using the GPS signals.

12. The method of any preceding claim, further comprising, in response to the condition not being satisfied, terminating transmitting the request message to the server device.

13. The method of any of claims 2 to 8, further comprising receiving a reward from the server device.

14. The method of claim 13, wherein the reward comprises at least one of:
a reduction of a cost of a subscription to the DL-TDoA network,
an addition of credit to a user account for the DL-TDoA network,
additional service in the DL-TDoA network, or
a compensation of energy consumed to operate as the ad hoc anchor device.

15. An ultra-wideband (UWB) device, comprising:
a transceiver operable to perform a UWB communication;
a memory for storing program instructions, device information, device locations, conditions required for operating as an ad hoc anchor in a downlink time difference of arrival (DL-TDoA) network; and
a processor coupled to the transceiver and to the memory, wherein the processor is operable to execute the program instructions, which, when executed by the processor, cause the UWB device to perform the following operations to join the DL-TDoA network as an ad hoc anchor device, comprising:
determining a location of the UWB device;
determining whether a condition to operate as the ad hoc anchor device in the DL-TDoA network is satisfied; and
in response to the condition being satisfied, transmitting a request message to operate as the ad hoc anchor device in the DL-TDoA network to a server device.
